# EUROPEAN PATENT SPECIFICATION

(11) **EP 1 233 114 B1**
(45) Date of publication and mention of the grant of the patent: **24.10.2007**
(21) Application number: 02075545.0
(22) Date of filing: 08.02.2002
(51) Int. Cl.: E04C 2/292, B29C 44/04

(54) **Method and device for producing a sandwich panel, and sandwich panel produced in this way**
Verfahren und Vorrichtung zur Herstellung eines Sandwichpaneels und nach diesem Verfahren hergestelltes Sandwichpaneel
Procédé et dispositif de fabrication d'un panneau composite et panneau composite obtenu par ce procédé

(30) Priority: 16.02.2001 NL 1017380
(43) Date of publication of application: 21.08.2002
(73) Proprietor: Corus Technology BV, 1970 CA Ijmuiden (NL)
(72) Inventor: Bunck, Cornelis Johannes, 1115 AB Duivendrecht (NL)
(74) Representative: Kruit, Jan

(56) References cited:
- WO-A-83/01081
- GB-A- 2 213 094
- US-A- 3 951 717

## Description

The invention relates to a method for producing a sandwich panel comprising a metal skin plate, a core layer of foam material and, if desired, a cover plate, the metal skin plate being provided, in the longitudinal direction of the sandwich panel, with outwardly projecting profiling in the form of a number of furrows with a cross section which is substantially trapezium-shaped.

Sandwich panels of this type and methods for their production are known see for example US 3 951 717 A. Usually, the metal skin plate is provided with a layer of foaming liquid which, during the foaming, fills the furrows and forms the core layer; during the foaming of the core layer, the cover plate is often applied. Sandwich panels of this type are in widespread use in construction, as insulating roofing panels or as insulating wall panels.

A drawback of this known method for the production of a sandwich panel is that the foaming liquid tends to run into the furrows before the foaming begins; as a result, a larger volume of foamed liquid forms above the furrows than above the sections of the skin plate which lie between the furrows. The result is an uneven distribution of the foam material over the width of the sandwich panel, with the result that the structure and geometry of the foam material over both the height and width of the core layer are not constant. To obtain a reasonably uniform core layer, the distribution of the foaming liquid has to be set accurately, which is a drawn-out and complex process, all the more so since the foaming of the foaming liquid is an exothermic reaction, the rate of which is highly dependent on the starting temperature and the local volume.

It is an object of the invention to provide an improved method for producing sandwich panels.

It is another object of the invention to provide a method for producing sandwich panels with which it is possible to produce sandwich panels with a largely homogeneous core layer.

It is yet another object of the invention to provide a method of this type which is easy to put into practice.

Yet another object of the invention is to provide a device for carrying out this method.

A further object of the invention is to provide an improved sandwich panel. In addition, it is an object of the invention to provide a less expensive sandwich panel.

According to a first aspect of the invention, one or more of these objects are achieved by a method for producing sandwich panels comprising a metal skin plate, a core layer of foam material and, if desired, a cover plate, the metal skin plate being provided, in the longitudinal direction of the sandwich panel, with outwardly projecting profiling in the form of a number of furrows with a cross section which is substantially trapezium-shaped, the method comprising the following steps:
a. the metal skin plate is positioned substantially horizontally, in such a manner that the furrows are open at the top;
b. the furrows are filled with a first quantity of foaming agent, in such a manner that the furrows, after the foaming of the foaming agent, are substantially completely filled;
c. after the foaming agent in the furrows has been substantially completely foamed, a second quantity of foaming agent is arranged above the metal skin plate in order to form the core layer by foaming;
d. if desired, a cover plate is applied during or after the foaming of the core layer.

Carrying out this method according to the invention leads to the furrows being substantially completely filled with the foamed first quantity of foaming agent, with the result that a substantially flat surface is formed, comprising the sections of the metal skin plate which lie between the furrows and the furrows which have been filled with foam material. Then, the second quantity of foaming agent is distributed over this surface, and this second quantity can be foamed very uniformly since the surface is virtually flat. The result is a uniform structure in the core layer, which is of great benefit to the quality of the sandwich panels produced in this way. It is also easy to adjust production with the aid of this method.

A preferred embodiment provides a method for the production of sandwich panels, in which the sandwich panels are produced substantially continuously by advancing a metal web provided with the profiling in its longitudinal direction, with the first and second foaming agents successively being applied to a section of the web and, if desired, a cover plate being applied, and finally the web being separated into separate sandwich panels. With the aid of this preferred embodiment, it is possible for the method as described above to be carried out continuously in order to obtain sandwich panels with a core layer of uniform structure.

It is preferable to use different foaming agents for the first and second foaming agent. As a result, it is possible to obtain a different foam structure in the furrows from that in the core layer.

According to a preferred embodiment of the method, the first foaming agent forms a less insulating foam material than the second foaming agent. This is because the insulating action of the sandwich panel is determined predominantly by the core layer and not by the furrows, and consequently the foam material in the furrows does not have to be as insulating as the insulating action of the core layer.

It is preferable for the first foaming agent to be a less expensive foaming agent than the second foaming agent. This is possible because the properties of the foaming agent in the furrows is of less importance.

According to a preferred embodiment, a steel skin plate or strip is used as the metal skin plate or strip. Steel is a relatively inexpensive material which is also relatively easy to work.

According to a further preferred embodiment, a cover plate or cover sheet is applied in the form of a metal, preferably steel, cover plate or cover sheet. In this way, the inner side of the sandwich panel is also well protected, and the insulating core layer is protected.

Alternatively, a cover plate or cover sheet is applied in the form of a non-metallic cover plate or cover sheet, preferably a plaster cover plate or cover sheet. This provides completely different protection for the core layer, which is preferred in some situations in which the sandwich panel is employed.

According to a preferred embodiment, a polyurethane is used as first and second foaming agents. This is a foaming agent which is in widespread use, of which much experience has been gained and which can be processed well and at low cost.

A second aspect of the invention provides a device for producing sandwich panels using the method as described above, comprising means for advancing the metal skin plate or sheet, means for applying a first foaming agent into the furrows in the metal skin plate or sheet, and means which are arranged at a distance therefrom for applying a second foaming agent over the metal skin plate or sheet, and if desired means for applying a cover layer or cover sheet.

With the aid of this device, it is possible to carry out the method as described above, preferably substantially continuously, on account of there being means for applying the first foaming agent in the furrows, and separate means, which are at a distance from the first means, for applying the second foaming agent over the entire width of the skin plate or sheet. Naturally, this distance is defined by the rate of advance of the skin plate or sheet and by the rate at which the first foaming agent is foamed. Therefore, it is advantageous if the distance between the two means is adjustable. It is also advantageous if the means for applying the first foaming agent in the furrows comprise a number of separate members which can be adjusted with respect to one another. It is also advantageous if each member can be adjusted in such a manner that the width of the outlet opening for the foaming agent is adjustable and can be adapted to the width of the furrows.

A third aspect of the invention relates to a sandwich panel comprising a metal cover plate, a core layer made from foam material and a cover plate, the metal skin plate being provided, in the longitudinal direction of the sandwich panel, with outwardly projecting profiling in the form of a number of furrows with a cross section which is substantially trapezium-shaped, and in which the foam material in the furrows has different properties and/or a different composition from the foam material between the metal skin plate and the cover plate.

Obviously, this sandwich panel can be produced using the method and device described above. Compared to the known sandwich panels of the same shape, the sandwich panel has the advantage that the foam material in the furrows has a different composition and/or different properties from the foam material for the core layer between the metal skin plate and the cover plate, with the result that it is also possible to use different types of foaming agent in the furrows from that used for the core layer. Therefore, there is a freedom of choice regarding the foam material in the furrows, while the properties of the sandwich panel as a whole are in fact determined only by the foam material for the core layer.

Preferably, the foam material in the furrows is less insulating than the foam material between the skin plate and the cover plate. This has no influence whatsoever on the insulation provided by the sandwich panel as a whole.

According to a preferred embodiment, the foam material in the furrows is less expensive than the foam material between skin plate and cover plate. This makes the sandwich panel less expensive than the known sandwich panels comprising one type of foam material.

The skin plate is preferably a steel plate, and preferably the cover plate is also a steel plate. Consequently, for the user there is no difference between the sandwich panel according to the invention and the known sandwich panels. The cover plate may also be a non-metallic plate, such as a plaster plate.

It is preferable for the foam material used to be a polyurethane foam. This is the foam material which is in most widespread use for sandwich panels of this type.

The invention will be explained with reference to the drawing, in which:
Fig. 1 is a cross section through an embodiment of a sandwich panel according to the invention, and
Fig. 2 diagrammatically depicts an embodiment of the device according to the invention.

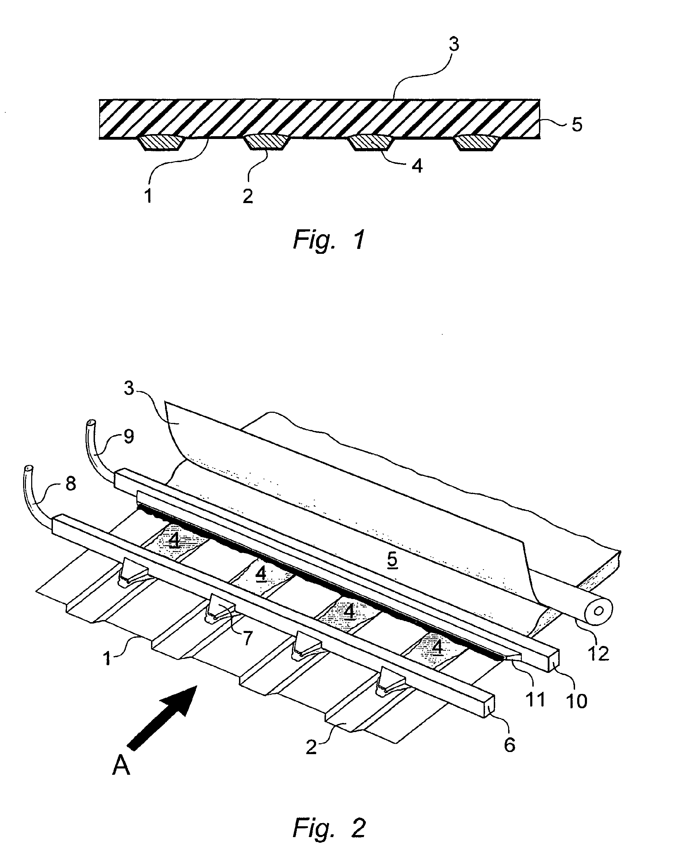

Fig. 1 shows a section through a sandwich panel according to the invention which is formed on the underside by a skin plate 1 with a profiling comprising four outwardly projecting trapezium-shaped furrows 2. This provides the panel with the required strength and rigidity for a given span. The top side of the panel comprises a cover plate 3. The furrows 2 are filled with a first foam material 4. Between the skin plate 1 with the filled furrows 2 and the cover plate 3 there is a core layer 5 made from a second foam material. Depending on the particular application, the number of trapezium-shaped furrows will vary, and the dimension of the furrows may also vary.

The skin plate 1 is formed from a steel plate usually 0.3 to 2 mm thick. The cover plate 3 is usually also a steel plate, but thinner. As an alternative to a steel cover plate 3, it would also be possible, for example, to select a (thicker) plaster cover plate (not shown).

The core layer 5 may be formed by foaming from all foaming liquids which are suitable for this type of application. A foaming liquid which is in widespread use is polyurethane. There are various types of polyurethane. For the core layer 5, a type is chosen which, in the foamed state, as foam material, offers sufficient strength and, at the same time, a good insulating action.
For the foam material 4 in the furrows 2, it is possible to choose the same foaming liquid as for the core layer 5, but this is not imperative. The filled furrows make no contribution whatsoever to the insulating action of the sandwich panel or to the strength. Therefore, it is possible for the foam material 4 in the furrows 2 to be a less insulating foam material, and at any rate a less expensive foam material, since this reduces the costs of the sandwich panel.

A device for the production of the sandwich panels described above is diagrammatically illustrated in Fig. 2. A sheet of skin material 1 is moved through the device (only partially illustrated) in the direction indicated by arrow A. The trapezium-shaped furrows 2 project downwards. The device has a feed bar 6 for supplying the first foaming liquid, which flows into the four furrows 2 by means of four outlet openings 7. The foaming liquid is supplied by means of a hose 8 or in some other way. The first foaming liquid is then foamed while the strip 1 is moving, thus forming the foamed foam material 4 in the furrows 2. The quantity of foaming liquid in the furrows 2 is selected in such a way that the top side of the foamed foam material in the furrows is at approximately the same height as the parts of the metal strip which lie between the furrows. As a result, the foam material 4 forms an approximately horizontal surface with the metal strip 1, over which surface the second foaming liquid can be uniformly distributed from a feed hose 9, via a second feed bar 10, by means of an outlet opening 11, in order to form an even core layer 5. During or after foaming of the core layer 5, the cover strip 3 can be applied above the core layer, for example by means of a roller 12. The web of sandwich material is then brought to the desired thickness in the customary way and is cut into sandwich panels by means which are not illustrated. The device also has conveyor means (not shown) for the sheet 1, such as driven rollers, and the like.

It is desirable for the distance between the feed bars 6 and 10 to be adjustable according to the first foaming liquid and the foaming reaction rate, and also for the number of outlet openings 7 and the width thereof to be adjustable, according to the number of furrows and the width thereof.

It will also be clear that, in the device described above, all kinds of modifications which do not change the operation of the device are possible. For example, instead of a feed bar 6 it is possible to select separate feed mechanisms for each outlet opening 7, and to use a movable feed mechanism instead of a feed bar 10. As an alternative to a foaming liquid, it is also possible to select some other foaming agent.

The method for producing the sandwich panels has in fact already been explained in the description of the device. The most important aspects are that, by using the method according to the invention, it is possible to use two different foaming agents, that a core layer which is regular and of uniform structure is formed, with the result that the sandwich panels are of higher quality, and that setting of the device in order to form the panels is easier, with the result that start-up losses are reduced.

## Claims

1. Method for producing sandwich panels comprising a metal skin plate, a core layer of foam material and, if desired, a cover plate, the metal skin plate being provided, in the longitudinal direction of the sandwich panel, with outwardly projecting profiling in the form of a number of furrows with a cross section which is substantially trapezium-shaped, the method comprising the following steps:
a. the metal skin plate is positioned substantially horizontally, in such a manner that the furrows are open at the top;
b. the furrows are filled with a first quantity of foaming agent, in such a manner that the furrows, after the foaming of the foaming agent, are substantially completely filled;
c. after the foaming agent in the furrows has been substantially completely foamed, a second quantity of foaming agent is arranged above the metal skin plate in order to form the core layer by foaming;
d. if desired, a cover plate is applied during or after the foaming of the core layer.

2. Method according to Claim 1, in which the sandwich panels are produced substantially continuously by advancing a metal web provided with the profiling in its longitudinal direction, with the first and second foaming agents successively being applied to a section of the web and, if desired, a cover plate being applied, and finally the web being separated into separate sandwich panels.

3. Method according to Claim 1 or 2, in which different foaming agents are used for the first and second foaming agent.

4. Method according to Claim 3, in which the first foaming agent is used to form a less insulating foam material than the second foaming agent.

5. Method according to Claim 3 or 4, in which a less expensive foaming agent is used as the first foaming agent than as the second foaming agent.

6. Method according to one of the preceding claims, in which a steel skin plate or strip is used as the metal skin plate.

7. Method according to one of Claims 1 - 6, in which a cover plate or cover sheet is applied in the form of a metal, preferably steel, cover plate or cover sheet.

8. Method according to one of Claims 1 - 6, in which a cover plate or cover sheet is applied in the form of a non-metallic cover plate or cover sheet, preferably a plaster cover plate or cover sheet.

9. Method according to one of the preceding claims, in which a polyurethane is used as first and second foaming agent.

10. Device for producing sandwich panels as described in one of the preceding claims, comprising means for advancing the metal skin plate or sheet, means for applying a first foaming agent into the furrows in the metal skin plate or sheet, and means which are arranged at a distance therefrom for applying a second foaming agent over the metal skin plate or sheet, and if desired means for applying a cover layer or cover sheet.

11. Sandwich panel comprising a metal cover plate, a core layer made from foam material and a cover plate, the metal skin plate being provided, in the longitudinal direction of the sandwich panel, with outwardly projecting profiling in the form of a number of furrows with a cross section which is substantially trapezium-shaped, and in which the foam material in the furrows has different properties and/or a different composition from the foam material between the metal skin plate and the cover plate.

12. Sandwich panel according to Claim 11, in which the foam material in the furrows is less insulating than the foam material between the skin plate and the cover plate.

13. Sandwich panel according to Claim 11 or 12, in which the foam material in the furrows is less expensive than the foam material between skin plate and cover plate.

14. Sandwich panel according to Claim 11, 12 or 13, in which the skin plate is a steel plate.

15. Sandwich panel according to one of Claims 11-14, in which the cover plate is a metal plate, preferably a steel plate.

16. Sandwich panel according to one of Claims 11-15, in which the cover plate is a non-metallic plate, preferably a plaster plate.

17. Sandwich panel according to one of Claims 11-16, in which a polyurethane foam is used as the foam material.

## Patentansprüche

1. Verfahren zur Herstellung von Sandwichpaneelen mit einer Metallhautplatte, einer Kernschicht aus Schaummaterial und, falls erwünscht, einer Abdeckplatte, wobei die Metallhautplatte, in Längsrichtung des Sandwichpaneels, eine auswärts vorstehende Formgebung in Form einer Anzahl an Furchen mit einem im Wesentlichen trapezoidförmigen Querschnitt aufweist, wobei das Verfahren die folgenden Schritte aufweist:
a. Die Metallhautplatte ist im Wesentlichen horizontal so angeordnet, dass die Furchen oben offen sind;
b. die Furchen sind mit einer ersten Menge an Schaumbildner bzw. Treibmittel so gefüllt, dass die Furchen, nach dem Aufschäumen des Treibmittels, im Wesentlichen vollständig gefüllt sind;
c. nachdem das Treibmittel in den Furchen im Wesentlichen vollständig aufgeschäumt ist, wird eine zweite Menge an Treibmittel über der Metallhautplatte aufgebracht, um die Kernschicht durch Aufschäumen zu bilden;
d. falls erwünscht, wird eine Abdeckplatte während oder nach dem Aufschäumen der Kernschicht angeordnet.

2. Verfahren nach Anspruch 1, bei dem die Sandwichpaneele im Wesentlichen kontinuierlich hergestellt werden, indem eine Metallbahn, mit der Formgebung in ihrer Längsrichtung versehen, vorgeschoben wird, wobei das erste und zweite Treibmittel nacheinander auf einen Abschnitt der Bahn aufgebracht werden und, falls erwünscht, eine Abdeckplatte angeordnet und die Bahn schließlich in zwei separate Sandwichpaneele getrennt wird.

3. Verfahren nach Anspruch 1 oder 2, bei dem verschiedene Treibmittel für das erste und zweite Treibmittel verwendet werden.

4. Verfahren nach Anspruch 3, bei dem das erste Treibmittel dazu verwendet wird, ein weniger isolierendes Schaummaterial als das zweite Treibmittel zu bilden.

5. Verfahren nach Anspruch 3 oder 4, wobei beim ersten Treibmittel ein weniger teures Treibmittel als beim zweiten Treibmittel verwendet wird.

6. Verfahren nach einem der vorhergehenden Ansprüche, bei dem eine Stahlhautplatte oder -streifen als Metallhautplatte verwendet wird.

7. Verfahren nach einem der Ansprüche 1 bis 6, bei dem eine Abdeckplatte oder ein Abdeckblech in Form einer Metall-, vorzugsweise Stahl-, -abdeckplatte oder eines
- abdeckblechs aufgebracht wird.

8. Verfahren nach einem der Ansprüche 1 - 6, bei dem eine Abdeckplatte oder ein Abdeckblech in Form einer nicht metallischen Abdeckplatte oder eines Abdeckblechs, bevorzugt eine Gipsabdeckplatte oder ein -abdeckblech, angeordnet wird.

9. Verfahren nach einem der vorhergehenden Ansprüche, bei dem ein Polyurethan als erstes und zweites Treibmittel verwendet wird.

10. Vorrichtung zur Herstellung von Sandwichpaneelen nach einem der vorhergehenden Ansprüche, umfassend Mittel zum Vorschieben der Metallhautplatte oder des -blechs, Mittel zum Aufbringen eines ersten Treibmittels in den Furchen in der Metallhautplatte oder dem -blech, und mit Abstand hierzu angeordnete Mittel, um ein zweites Treibmittel über der Metallhautplatte oder dem -blech aufzubringen, und, falls erwünscht, Mittel zum Aufbringen einer Deckschicht oder eines Abdeckblechs.

11. Sandwichpaneel, umfassend eine Metallabdeckplatte, eine Kernschicht aus Schaummaterial und eine Abdeckplatte, wobei die Metallhautplatte in Längsrichtung des Sandwichpaneels eine auswärts vorstehende Formgebung in Form einer Anzahl von Furchen mit einem im Wesentlichen trapezoidförmigen Querschnitt aufweist, und wobei das Schaummaterial in den Furchen verschiedene Eigenschaften und/oder eine von dem Schaummaterial zwischen der Metallhautplatte und der Abdeckplatte verschiedene Zusammensetzung hat. sammensetzung hat.

12. Sandwichpaneel nach Anspruch 11, bei dem das Schaummaterial in den Furchen weniger als das Schaummaterial zwischen der Hautplatte und der Abdeckplatte isoliert.

13. Sandwichpaneel nach Anspruch 11 oder 12, bei dem das Schaummaterial in den Furchen preiswerter als das Schaummaterial zwischen der Hautplatte und der Abdeckplatte ist.

14. Sandwichpaneel nach Anspruch 11, 12 oder 13, bei dem die Hautplatte eine Stahlplatte ist.

15. Sandwichpaneel nach einem der Ansprüche 11 - 14, bei dem die Abdeckplatte eine Metallplatte, bevorzugt eine Stahlplatte, ist.

16. Sandwichpaneel nach einem der Ansprüche 11 - 15, bei dem die Abdeckplatte eine nicht metallische Platte, bevorzugt eine Gipsplatte, ist.

17. Sandwichpaneel nach einem der Ansprüche 11 - 16, bei dem ein Polyurethanschaum als Schaummaterial verwendet wird.

## Revendications

1. Procédé pour produire des panneaux en sandwich comprenant une plaque de peau en métal, une couche de coeur en un matériau en mousse, et, si on le souhaite, une plaque de revêtement, la plaque de peau en métal étant munie, dans la direction longitudinale du panneau en sandwich, d'un profilage faisant saillie vers l'extérieur sous la forme d'un certain nombre de sillons avec une section transversale qui est sensiblement en forme de trapèze, le procédé comprenant les étapes suivantes, consistant à :
a. positionner la plaque de peau en métal de façon sensiblement horizontale, de telle sorte que les sillons soient ouverts au sommet ;
b. remplir les sillons avec une première quantité d'agent moussant, de telle sorte que les sillons, après le moussage de l'agent moussant, soient sensiblement complètement remplis ;
c. après que l'agent moussant dans les sillons ait été sensiblement complètement transformé en mousse, disposer une deuxième quantité d'agent moussant au-dessus de la plaque de peau en métal afin de former la couche de coeur par moussage ;
d. si on le souhaite, appliquer une plaque de revêtement pendant ou après le moussage de la couche de coeur.

2. Procédé selon la revendication 1, dans lequel les panneaux en sandwich sont produits de façon sensiblement continue en faisant avancer un film métallique muni du profilage dans sa direction longitudinale, avec les premier et deuxième agents moussants qui sont successivement appliqués à une section du film, et, si on le souhaite, une plaque de revêtement étant appliquée, et, finalement, le film étant séparé en panneaux en sandwich séparés.

3. Procédé selon la revendication 1 ou 2, dans lequel des agents moussants différents sont utilisés pour les premier et deuxième agents moussants.

4. Procédé selon la revendication 3, dans lequel le premier agent moussant est utilisé pour former un matériau en mousse moins isolant que le deuxième agent moussant.

5. Procédé selon la revendication 3 ou 4, dans lequel un agent moussant moins coûteux est utilisé pour le premier agent moussant que pour le deuxième agent moussant.

6. Procédé selon l'une des revendications précédentes, dans lequel une plaque ou une bande de peau en acier est utilisée comme plaque de peau en métal.

7. Procédé selon l'une des revendications 1 à 6, dans lequel une plaque de revêtement ou une feuille de revêtement est appliquée sous la forme d'une plaque de revêtement ou d'une feuille de revêtement en métal, de préférence en acier.

8. Procédé selon l'une des revendications 1 à 6, dans lequel une plaque de revêtement ou une feuille de revêtement est appliquée sous la forme d'une plaque de revêtement ou d'une feuille de revêtement non-métallique, de préférence une plaque de revêtement ou une feuille de revêtement en plâtre.

9. Procédé selon l'une des revendications précédentes, dans lequel un polyuréthanne est utilisé comme premier et deuxième agents moussants.

10. Dispositif pour fabriquer des panneaux en sandwich selon l'une des revendications précédentes, comprenant des moyens pour faire avancer la plaque ou feuille de peau en métal, des moyens pour appliquer un premier agent moussant dans les sillons dans la plaque ou feuille de peau en métal, et des moyens qui sont disposés à une certaine distance de celle-ci pour appliquer un deuxième agent moussant sur la plaque ou feuille de peau en métal, et, si on le souhaite, des moyens pour appliquer une couche de revêtement ou une feuille de revêtement.

11. Panneau en sandwich comprenant une plaque de revêtement en métal, une couche de coeur réalisée à partir d'un matériau en mousse et d'une plaque de revêtement, la plaque de peau en métal étant munie, dans la direction longitudinale du panneau en sandwich, d'un profilage faisant saillie vers l'extérieur sous la forme d'un certain nombre de sillons avec une section transversale qui est sensiblement en forme de trapéze, et dans lequel le matériau en mousse dans les sillons a des propriétés différentes et/ou une composition différente du matériau en mousse entre la plaque de peau en métal et la plaque de revêtement.

12. Panneau en sandwich selon la revendication 11, dans lequel le matériau en mousse dans les sillons est moins isolant que le matériau en mousse entre la plaque de peau et la plaque de revêtement.

13. Panneau en sandwich selon la revendication 11 ou 12, dans lequel le matériau en mousse dans les sillons est moins coûteux que le matériau en mousse entre la plaque de peau et la plaque de revêtement.

14. Panneau en sandwich selon la revendication 11, 12 ou 13, dans lequel la plaque de peau est une plaque en acier.

15. Panneau en sandwich selon l'une des revendications 11 à 14, dans lequel la plaque de revêtement est une plaque métallique, de préférence une plaque en acier.

16. Panneau en sandwich selon l'une des revendications 11 à 15, dans lequel la plaque de revêtement est une plaque non-métallique, de préférence une plaque en plâtre.

17. Panneau en sandwich selon l'une des revendications 11 à 16, dans lequel une mousse de polyuréthanne est utilisée comme matériau en mousse.
